# EUROPÄISCHE PATENTSCHRIFT

(11) **EP 0 679 675 B1**
(45) Veröffentlichungstag und Bekanntmachung des Hinweises auf die Patenterteilung: **29.07.1998**
(21) Anmeldenummer: 95105604.3
(22) Anmeldetag: 13.04.1995
(51) Int. Cl.: C08G 77/42, C08G 77/38, C08L 83/10, C08L 83/06, C08L 83/08, C08G 81/02

(54) **Polymethacrylsäureester-Polysiloxan-Blockmischpolymerisate, Verfahren zu ihrer Herstellung und ihre Verwendung als Modifizierungsmittel und als Lackadditive**
Polymethacrylic acid ester-polysiloxane block copolymers, their preparation and use as modifier and paint additive
Copolymère en bloc des esterpolyméthacrylique-polysiloxane, leur préparation et leur utilisation comme modificateurs et additifs pour peintures

(30) Priorität: 26.04.1994 DE 4414465
(43) Veröffentlichungstag der Anmeldung: 02.11.1995
(73) Patentinhaber: Th. Goldschmidt AG, 45127 Essen (DE)
(72) Erfinder: Esselborn, Eberhard, D-45147 Essen (DE); Fock, Jürgen, Dr., D-40470 Düsseldorf (DE)

(56) Entgegenhaltungen:
- EP-A- 0 205 827
- EP-A- 0 281 718
- EP-A- 0 351 859

## Beschreibung

Die Erfindung betrifft Polymethacrylsäureester-Polysiloxan-Blockmischpolymerisate des Typs ABA oder AB, wobei A einen Polymethacrylsäureester-Block und B einen Polysiloxan-Block bedeuten.

Die Erfindung betrifft ferner ein Verfahren zur Herstellung derartiger Block-Copolymerisate sowie deren Verwendung. Die Produkte können einerseits zum Modifizieren von Kunststoffen, insbesondere solchen auf (Meth)acrylatbasis, dienen oder als Additive für organische Lacksysteme eingesetzt werden.

Polymethacrylsäureester-Polysiloxan-Blockmischpolymerisate sind bekannt. Ihre Herstellung bereitet jedoch erhebliche Probleme. Zu diesem Stand der Technik sind zu nennen:

In der DE-PS 21 64 469 und der US-PS 3 663 650 ist zur Herstellung solcher Verbindungen die Umsetzung von Cyclopolysiloxanen, wie z. B. Hexamethyltrisiloxan mit Methacrylat in Gegenwart eines aromatischen Lithium-Carbanion-Initiators, wie z. B. Dilithium-Benzophenon.

Nach Polym. Bull. (Berlin), 15 (2), 107-112 werden ABA-Blockcopolymere durch Umsetzung von mit Mercaptopropylalkylalkoxysilanen geregeltem Polymethylmethacrylat mit hydroxyfunktionellen Polysiloxanen hergestellt.

In Polym. Prepr. (Am. Chem. Soc. Div. Polym. Chem.), 29 (1), 148-149 ist ein Verfahren zur Herstellung von AB-Blockcopolymeren auf der Grundlage von Polydimethylsiloxan und Polymethylmethacrylat durch anionische Polymerisation und Group-Transfer-Polymerisation beschrieben.

Mason, J.P. et al. Polym. Prepr. (Am. Chem. Soc. Div. Polym. Chem.), 30 (1), 259 beschreiben die Anlagerung von Hexamethylcyclotrisiloxan an anionisch "lebendes" Polymethylmethacrylat unter Erhalt eines AB-Blockcopolymerisates.

Die gleichen Autoren behandeln in der genannten Literaturstelle (31 (1), 510) die Synthese von Polymethylmethacrylat-Polydimethylsiloxan-Blockcopolymeren mit Sternstruktur oder des Typus ABA durch Anlagerung von Hexamethylcyclotrisiloxan an monohydroxyterminiertes Polymethylmethacrylat und anschließender Terminierung mit Alkylchlorsilan.

Nachteilig ist bei diesen beschriebenen Synthesen, daß sie entweder auf anionischem Wege erfolgen, was die Verwendung von Monomeren hoher Reinheit und die Durchführung der Reaktion bei Temperaturen unter 0°C voraussetzt, oder daß die Verknüpfung der Segmente über die hydrolyseempfindliche Si-0-C-Bindung erfolgt. Auch der an zweiter Stelle genannte Syntheseweg weist wegen der hohen Empfindlichkeit der Alkoxysilylgruppe des eingesetzten Kettenübertragungsreagens Nachteile auf, da während der Reaktion sorgfältigst auf Ausschluß von Feuchtigkeit geachtet werden muß.

In jüngster Zeit sind durch Umesterung von Polyacrylsäurealkylestern (Alkylreste mit 1 bis 8 Kohlenstoffatomen) mit speziellen Alkoholen, die meist funktionelle Gruppen aufweisen, erhältliche funktionalisierte Polyacrylsäureester mehrfach beschrieben worden, wie z. B. in der DE-PS 38 42 201 und DE-PS 38 42 202 sowie in den DE-OSen 39 06 702, 40 06 093, 41 23 478, 42 02 187 und 42 24 412.

Diese Umesterungsprodukte haben gegenüber den analogen Copolymerisaten wesentliche Vorteile, wie z. B. eine wesentlich einheitlichere Molekulargewichtsverteilung. Sie sind weitgehend frei von monomeren Anteilen. Durch das Umesterungsverfahren gelingt überhaupt erst die Herstellung von Polyacrylsäureestern, deren alkoholische Esterkomponente olefinische Doppelbindungen aufweist, ohne Bildung von höhermolekularen Nebenprodukten. So ist es ohne weiteres möglich, Polyacrylsäureester mit Oleylalkohol und gleichzeitig mit weiteren Hydroxylgruppen aufweisenden Verbindungen umzuestern.

Bei diesen Umesterungsverfahren verläuft die Umesterung meist bis zu Umesterungsgraden von etwa 70 %, wobei Produkte mit zumindest angenähert statistischer Verteilung der durch die Umesterung eingeführten Alkohole längs der Polymerenkette erhalten werden.

Diese Umesterungsverfahren lassen sich aber nicht ohne weiteres mit den entsprechenden Polymethacrylsäurealkylestern durchführen.

Aus Chemical Abstracts 98 (No. 8, 54652f) ist es zwar bekannt, Polymethacrylsäureester mit einem großen Überschuß an Diethylaminoethanol bei Temperaturen von > 150°C in Gegenwart von Titanaten als Katalysatoren umzusetzen. Hierbei werden Polymere erhalten, bei denen ein Teil der Estergruppen mit Diethylaminoethanol umgeestert worden ist. Bei dieser Temperatur werden aber verhältnismäßig uneinheitliche Produkte erhalten, wobei thermische Zersetzungsprodukte nicht vermieden werden können.

Es war deshalb überraschend, daß es in verhältnismäßig einfacher Weise und ohne Bildung unerwünschter Nebenprodukte möglich ist, Polymethacrylsäureester-Polysiloxan-Blockmischpolymerisate durch Umesterung von Polymethacrylsäureestern mit hydroxyfunktionellen Polysiloxanen herzustellen und damit neuartige Copolymerisate zu erhalten, welche besondere Eigenschaften erwarten lassen und damit anwendungstechnisch von besonderem Interesse sind.

Gegenstand der vorliegenden Erfindung sind deshalb neue Polymethacrylsäureester-Polysiloxan-Blockmischpolymerisate der allgemeinen Formel 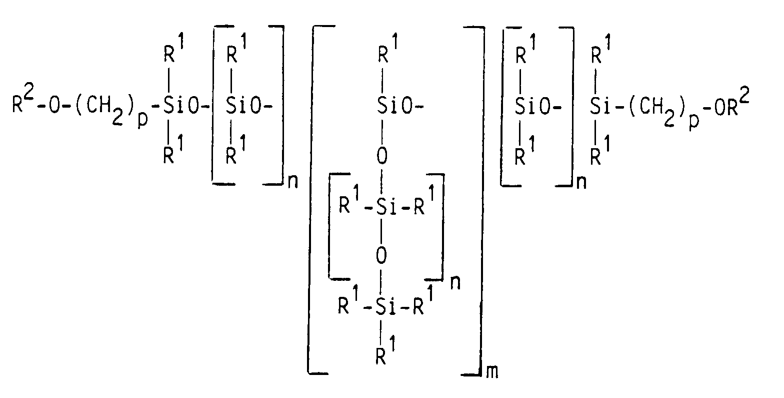 wobei die Reste
- R¹: im Molekül gleich oder verschieden sind und Alkylreste mit 1 bis 18 Kohlenstoffatomen oder Phenyl-Reste bedeuten, jedoch mindestens 90 % der Reste R¹ Methylreste sind,
- R²: Wasserstoff- oder Polymethacrylsäureester-Reste der allgemeinen Formel 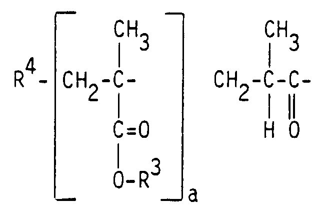 sind, in der die Reste
R³ gleich oder verschieden sind und Alkylreste mit 1 bis 8 Kohlenstoffatomen, Perfluoralkylreste oder Alkylaminoreste, deren Stickstoffatom(e) protoniert oder quaterniert sein kann (können), bedeuten,
R⁴ der Rest eines an sich bekannten Kettenreglers, ohne aktive Wasserstoffatome ist,
a eine Zahl ist, die im Mittel ≥ 3 ist,
mit der Maßgabe, daß mindestens ein Rest R² die Bedeutung des Polymethacrylsäureester-Restes hat,
- n: jeweils einen Zahlenwert von 1 bis 500,
- m: einen Zahlenwert von 0 bis 10 und
- p: einen Zahlenwert von 3 bis 12 hat.

Die Reste R¹ sind vorzugsweise niedere Alkylreste mit 1 bis 4 Kohlenstoffatomen, insbesondere Methylreste und Arylreste. Besonders bevorzugt sind Polysiloxan-Blöcke, bei denen alle Reste R Methylreste sind. Es kann jedoch aus Gründen der besseren Verträglichkeit mit bestimmten Kunststoffen von Vorteil sein, einige der Methylreste gegen Phenylreste auszutauschen. Jedoch muß die Bedingung erfüllt sein, daß mindestens 90 % der Reste R¹ Methylreste sind.

Liegt ein Copolymerisat vom Typ AB vor, hat ein Rest R² die Bedeutung eines Wasserstoffrestes. Hat das Copolymerisat die Konfiguration ABA, müssen beide Reste R² Polymethacrylsäureester-Reste der allgemeinen Formel 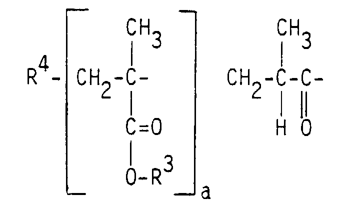 sein.

Die Reste R³ sind dabei im polymeren Molekül gleich oder verschieden und bedeuten Alkylreste mit 1 bis 8 Kohlenstoffatomen, Perfluoralkylreste oder Alkylaminoreste. Beispiele geeigneter Reste sind der Methyl-, Butyl- oder Octylrest. Beispiele geeigneter Perfluoralkylreste sind der Trifluorethyl-, Pentafluorethyl-, Nonafluorhexyl- und der Tridecafluoroctylrest. Als Alkylaminoreste sind insbesondere -(CH₂)_{q}-NR⁵ Reste, bei denen R⁵ ein Alkylrest mit 1 bis 18 Kohlenstoffatomen oder ein Aralkylrest, wie z. B. ein Benzylrest, ist und q einen Zahlenwert von 2 bis 10 hat, geeignet; diese können gegebenenfalls protoniert oder quaterniert sein.

R⁴ ist der Rest eines an sich bekannten Kettenreglers, wobei der Rest frei von aktiven Wasserstoffatomen ist. Beispiele für geeignete Kettenregler sind Mercaptane, Chloroform und Isopropylalkohol. Bevorzugtes Beispiel eines solchen, vom Kettenregler herrührenden Restes R⁴ ist der Rest -S-C₁₂H₂₅. Weitere Beispiele für Reste, die vom Kettenregler herrühren, sind der von tert.-Dodecylmercaptan abgeleitete Rest und der n-Dodecyl- und Tetradecylmercaptanrest.

a ist eine Zahl, die im Mittel ≥ 3 ist und vorzugsweise einen Wert von 6 bis 50 hat.

n gibt die Anzahl der difunktionellen Siloxygruppen an und hat jeweils einen Wert von 1 bis 100.

m gibt die Anzahl der verzweigten, trifunktionellen Si-Einheiten an, wobei m einen Wert von 0 bis 10 hat. Vorzugsweise ist aber m = 0, so daß der Polysiloxanblock lineare Struktur aufweist.

p hat einen Zahlenwert von 3 bis 12 und ist vorzugsweise 3 oder 6.

Bevorzugt sind somit lineare Polymethacrylsäureester-Polysiloxan-Blockmischpolymerisate und insbesondere solche des Typs ABA. Besonders bevorzugt sind Copolymerisate, bei denen die Reste R¹ Methylreste, die Reste R³ Alkylreste mit 1 bis 8 Kohlenstoffatomen sind, der Index n jeweils 4 bis 50, der Index m = 0 und der Index p = 3 oder 6 ist.

Beispiele geeigneter erfindungsgemäßer Substanzen sind:

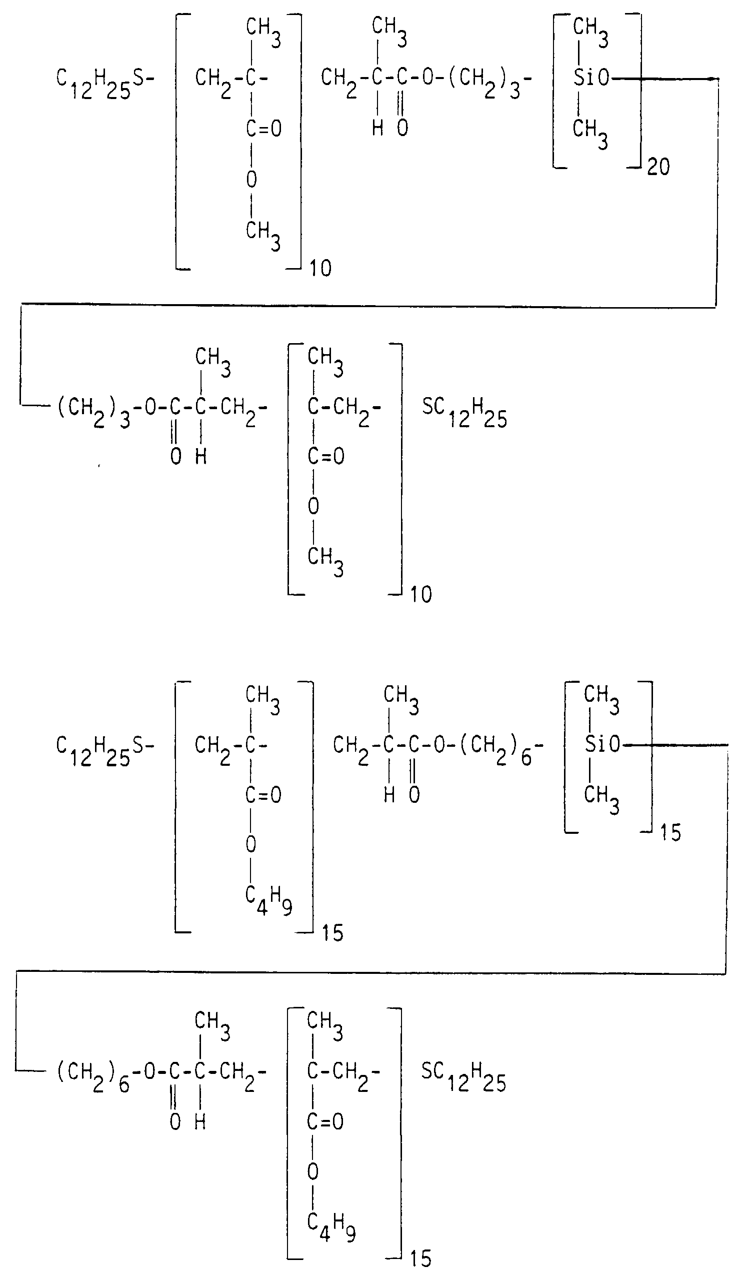

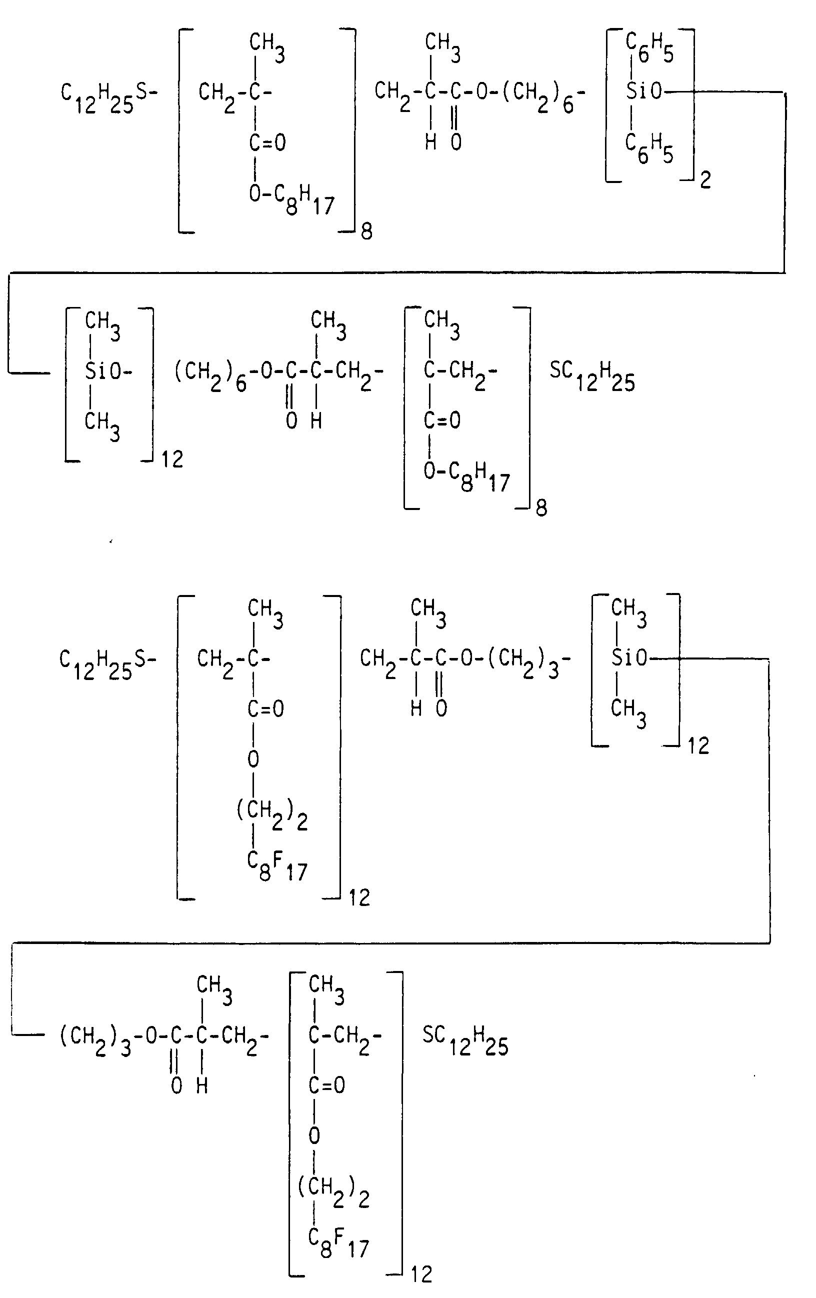

Ein weiterer Gegenstand der vorliegenden Erfindung besteht in der Herstellung der erfindungsgemäßen Verbindungen. Dabei ist das erfindungsgemäße Verfahren dadurch gekennzeichnet, daß man Polysiloxane der allgemeinen Formel 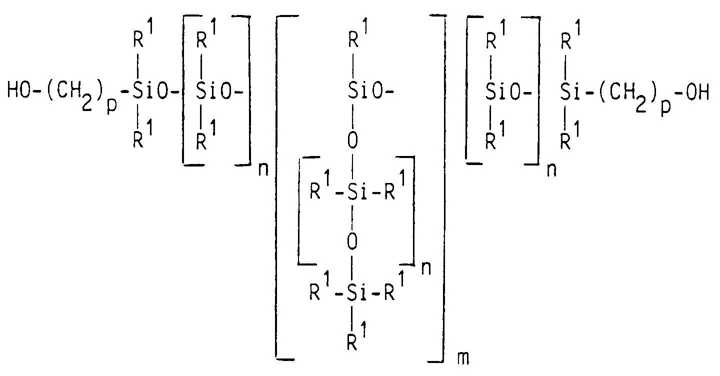 wobei die Reste R¹ und Indices n, m und p die bereits angegebene Bedeutung haben, mit Polymethacrylsäureestern der allgemeinen Formel 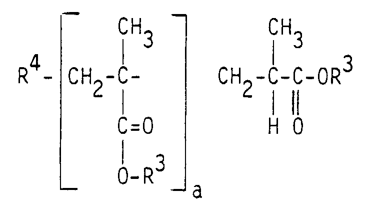 im Molverhältnis von Polymethacrylsäureestern zu Polysiloxanen von 1 : 1 bis 2,5 : 1 in Gegenwart von Umesterungskatalysatoren und gegebenenfalls in Gegenwart von inerten Lösungsmitteln bei Temperaturen von 70 bis 150°C unter Abdestillieren des freiwerdenden Alkohols R³OH umsetzt.

Es war überraschend, daß bei diesen Verfahrensbedingungen die Umesterung, je nach verwendetem Molverhältnis, nur an einem oder in sehr geringfügigem Umfang an beiden endständigen Methacrylsäureestergruppen stattfindet. Die in der Kette vorliegenden Methacrylsäureester werden nicht oder nur in ganz untergeordnetem, vernachlässigbarem Umfang umgeestert. Voraussetzung hierfür ist allerdings, daß keine basischen Umesterungskatalysatoren, wie Alkalimethylat, und keine Reaktionstemperaturen > 150°C verwendet werden.

Bevorzugte Umesterungskatalysatoren sind Alkyltitanat, Alkylzirkonat, Dialkylzinnacetathalogenid oder Dialkylzinndialkylester, die in Mengen von 0,5 bis 2 Gew.-%, bezogen auf Polymethacrylsäureester, verwendet werden. Beispiele besonders geeigneter Katalysatoren sind Isopropyltitanat, n-Butyltitanat, n-Propylzirkonat, Dibutylzinnacetatchlorid, Dibutylzinndiacetat und Dibutylzinndilaurat.

Die Reaktionstemperatur beträgt 70 bis 150°C, vorzugsweise 100 bis 130°C.

Die Reaktion kann mit oder ohne Lösungsmittel durchgeführt werden. Im Falle der Verwendung eines Lösungsmittels bieten sich Toluol, Xylol oder Benzinfraktionen mit einem Siedebereich von 70 bis 140°C an.

Ein weiterer Gegenstand der Erfindung besteht in der Verwendung der erfindungsgemäßen Verbindungen. Aufgrund der besonderen Struktur der erfindungsgemäßen Copolymerisate eignen sich diese insbesondere zur Modifizierung von Polymerisaten, wie Polymethylmethacrylat, Polybutyl(meth)acrylat sowie Methacrylatcopolymerisate.

Die erfindungsgemäßen Verbindungen können ferner organischen Lacken zugesetzt werden, wobei die nach dem Trocknen und/oder Aushärten erhaltenen Oberflächenfilme eine hohe Glätte verbunden mit einem sehr niedrigen Gleitwiderstand und hoher Kratzfestigkeit aufweisen. Darüber hinaus vermitteln sie den modifizierten Lacken eine erhöhte Wasserabweisung und tragen somit zu einer nachhaltigen Verbesserung der Hydrolyse- und Bewitterungsbeständigkeit bei. Dabei zeigen sie eine gute Substrathaftung und hohe Permanenz bei Reinigungsprozessen.

Weiterhin können sie der Erniedrigung der Schmelzviskosität in verschiedenen Thermoplasten dienen.

Ihre Verwendung in Kombination mit Silikonölen dient der Erhöhung der Schlagzähigkeit von unterschiedlichen Thermoplasten, wie HIPS und ABS.

In den folgenden Beispielen soll die Herstellung der erfindungsgemäßen Verbindungen näher gezeigt werden. Deren anwendungstechnische Eigenschaften ergeben sich aus entsprechenden hieran anschließenden Beispielen.

### Beispiel 1

### Herstellung eines Polymethacrylates durch geregelte radikalische Polymerisation (nicht erfindungsgemäßes Ausgangsprodukt)

Eine Lösung von 1,4 g Azodiisobuttersäurenitril, 94 g (ca. 0,47 Mol) Dodecylmercaptan, 76 g Xylol und 376 g (ca. 3,76 Mol) Methylmethacrylat wird innerhalb von 3 bis 4 Stunden in einen mit 40 g Xylol gefüllten Reaktor gegeben. Das vorgelegte Lösungsmittel hat eine Temperatur von 100°C und befindet sich unter Stickstoffatmosphäre. Anschließend werden nochmals 0,93 g Azodiisobuttersäurenitril, gelöst in 9,3 g Methylethylketon, innerhalb von 1 Stunde in gleichen Teilen nachgegeben. Schließlich wird das Reaktionsgemisch noch für 1 Stunde bei der gleichbleibenden Temperatur von 100°C weiter erwärmt. Nach Beendigung der Reaktion werden das Lösungsmittel und das Restmonomere bei 130°C/1 Torr abdestilliert; es verbleibt eine farblose, viskose Flüssigkeit.

Aus der gelchromatographischen Untersuchung ergibt sich für das erhaltene Polymerisat ein numerisches Molekulargewicht Mₙ (GPC) von 1100 und für das Gewichtsmittel des Molekulargewichtes M_{w} (GPC) ein Wert von 1710. Der Uneinheitlichkeitskoeffizient beträgt demnach 1,55. Der Restmonomergehalt ist kleiner 0,1 %. Das Beispiel wird mit unterschiedlichen Methacrylaten gemäß folgender Tabelle wiederholt:

**Tabelle 1**

| Beispiel Nr. | Methacrylat | Molverhältnis Methacrylat/Regler | Mₙ/Osmometrie | Mₙ/GPC PMMA-Standard | Uneinheitlichkeitskoeffizient |
|---|---|---|---|---|---|
| 1 A | MMA | 8 /1 | 1150 | 1100 | 1,55 |
| 1 B | MMA | 28 /1 | 2600 | 2650 | 1,86 |
| 1 C | BMA | 5,6/1 | 950 | 1000 | 1,39 |
| 1 D | EHMA | 4 /1 | 950 | 1350 | 1,34 |
| 1 E | TFEMA | 7 /1 | 1050 | 1150 | 1,49 |
| MMA: Methylmethacrylat BMA: n-Butylmethacrylat EHMA: 2-Ethylhexylmethacrylat TFEMA: 2,2,2-Trifluorethylmethacrylat | | | | | |

### Beispiel 2

### Herstellung eines Polymethylmethacrylat-b-Polysiloxan-b-Polymethylmethacrylat-Copolymeren (erfindungsgemäß)

121 g (ca. 0,11 Mol) des Produktes 1 A und 119 g (ca. 0,05 Mol) eines α-,ω-Dihydroxyhexylpolysiloxans mit einem Molekulargewicht von 2380 werden in 100 g Xylol gelöst und unter Reinstickstoff auf etwa 110°C erwärmt. Anschließend wird das Lösungsmittel unter gleichzeitiger Abtrennung möglicherweise vorhandenen Wassers bei 5 Torr abdestilliert. Nach Zugabe von 240 g getrocknetem Xylol erfolgt bei 115°C die Zugabe von 0,6 g Isopropyltitanat. Das bei der einsetzenden Reaktion entstehende Methanol wird durch Fraktionierung vom Xylol getrennt. Nach 4 Stunden werden nochmals 0,6 g Isopropyltitanat zugegeben, Methanol entfernt und die Reaktion nach 3 Stunden beendet.

Die Hydroxylzahl des erhaltenen Produktes beträgt 1,5, was einem Umsatz von 94 %, bezogen auf die OH-Gruppen der im Unterschuß eingesetzten Komponente, entspricht.

Es werden weitere erfindungsgemäße Blockmischpolymerisate entsprechend den Angaben in der folgenden Tabelle hergestellt:

**Tabelle 2**

| Beispiel Nr. | Polymethacrylat | | Mₙ Polysiloxan | Reaktionsdauer [ h ] | Hydroxylzahl Endprodukt | Umsatz [ % ] |
|---|---|---|---|---|---|---|
| | Produkt | Molverhältnis | | | | |
| 2 A | 1 A | 2,2 | 2380 | 7 | 1,5 | 94 |
| 2 B | 1 A | 2,1 | 880 | 5 | 1,0 | 97 |
| 2 C | 1 C | 2,2 | 3280 | 10 | 1,0 | 91 |
| 2 D | 1 D | 2,3 | 2380 | 12 | 1,3 | 94 |
| 2 E | 1 E | 2,2 | 2380 | 8 | 0,8 | 97 |
| 2 F | 1 B | 2,3 | 2380 | 8 | 1,6 | 90 |

## Patentansprüche

1. Polymethacrylsäureester-Polysiloxan-Blockmischpolymerisate der allgemeinen Formel 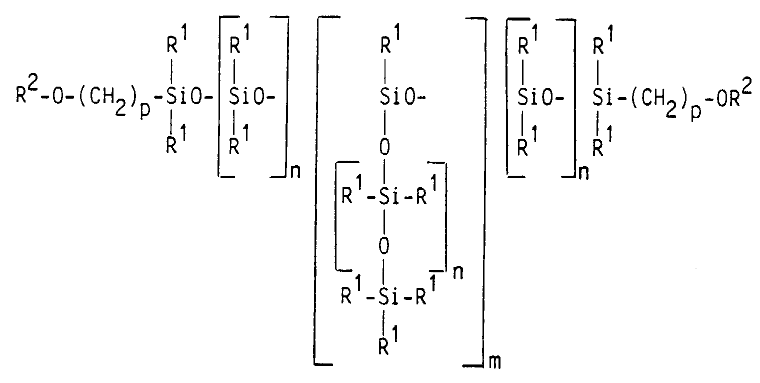 wobei die Reste
R¹ im Molekül gleich oder verschieden sind und Alkylreste mit 1 bis 18 Kohlenstoffatomen oder Phenylreste bedeuten, jedoch mindestens 90 % der Reste R¹ Methylreste sind,
R² Wasserstoff- oder Polymethacrylsäureester-Reste der allgemeinen Formel 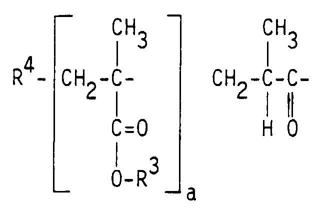 sind, in der die Reste
R³ gleich oder verschieden sind und Alkylreste mit 1 bis 8 Kohlenstoffatomen, Perfluoralkylreste oder Alkylaminoreste, deren Stickstoffatom(e) protoniert oder quaterniert sein kann (können), bedeuten,
R⁴ der Rest eines an sich bekannten Kettenreglers, ohne aktive Wasserstoffatome ist,
a eine Zahl ist, die im Mittel ≥ 3 ist,
mit der Maßgabe, daß mindestens ein Rest R² die Bedeutung des Polymethacrylsäureester-Restes hat,
n jeweils einen Zahlenwert von 1 bis 500,
m einen Zahlenwert von 0 bis 10 und
p einen Zahlenwert von 3 bis 12 hat.

2. Blockmischpolymerisat nach Anspruch 1, dadurch gekennzeichnet, daß die Reste R¹ Methylreste und die Reste R³ Alkylreste mit 1 bis 4 Kohlenstoffatomen sind, der Index n einen Zahlenwert von 4 bis 100, der Index m einen Zahlenwert von 0 und der Index p einen Zahlenwert von 3 oder 6 hat.

3. Verfahren zur Herstellung der Blockmischpolymerisate nach den Ansprüchen 1 oder 2, dadurch gekennzeichnet, daß man Polysiloxane der allgemeinen Formel 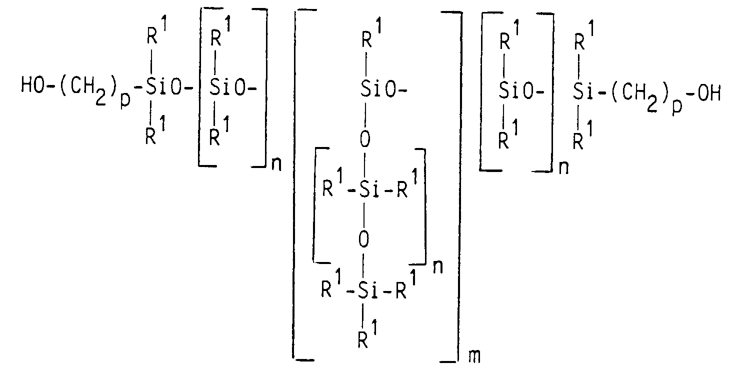 wobei die Reste R¹ und Indices n, m und p die bereits angegebene Bedeutung haben, mit Polymethacrylsäureestern der allgemeinen Formel 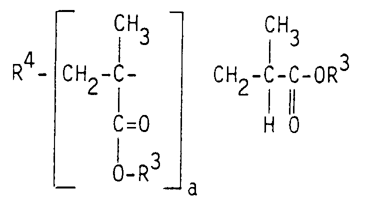 im Molverhältnis von Polymethacrylsäureestern zu Polysiloxanen von 1 : 1 bis 2,5 : 1 in Gegenwart von Umesterungskatalysatoren und gegebenenfalls in Gegenwart von inerten Lösungsmitteln beim Temperaturen von 70 bis 150°C unter Abdestillieren des freiwerdenden Alkohols R³OH umsetzt.

4. Verwendung der Blockmischpolymerisate nach Ansprüchen 1 oder 2 als Modifizierungsmittel für Poly(meth)acrylate sowie als Additive für in organischen Lösungsmitteln gelöste Lacke.

## Claims

1. Polymethacrylic ester-polysiloxane block copolymers of the general formula 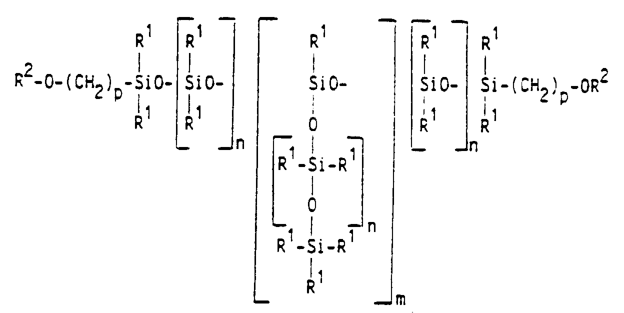 where the radicals
R¹ are identical or different in the molecule and are alkyl radicals having from 1 to 18 carbon atoms or phenyl radicals, but at least 90% of the radicals R¹ are methyl radicals,
R² are hydrogen or polymethacrylic ester radicals of the general formula 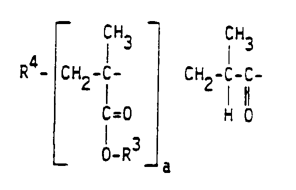 where the radicals
R³ are identical or different and are alkyl radicals having from 1 to 8 carbon atoms, perfluoroalkyl radicals or alkylamino radicals whose nitrogen atom(s) can be protonated or quaternized,
R⁴ is the radical of a chain regulator known per se, without active hydrogen atoms,
a is a number which on average is ≥ 3,
with the proviso that at least one radical R² is a polymethacrylic ester radical,
n is in each case from 1 to 500,
m is from 0 to 10 and
p is from 3 to 12.

2. Block copolymers according to Claim 1, characterized in that the radicals R¹ are methyl radicals and the radicals R³ are alkyl radicals having from 1 to 4 carbon atoms, the index n is from 4 to 100, the index m is 0 and the index p is 3 or 6.

3. Process for preparing the block copolymers according to Claim 1 or 2, characterized in that polysiloxanes of the general formula 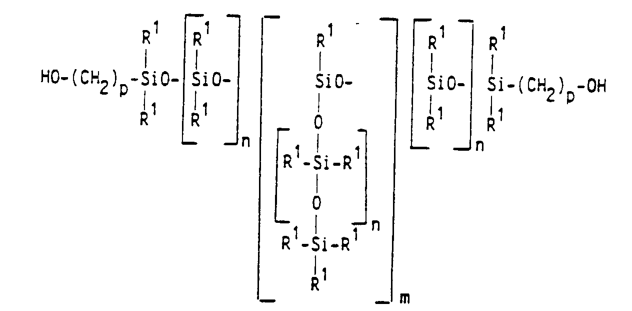 where the radicals R¹ and indices n, m and p are as defined above, are reacted with polymethacrylic esters of the general formula 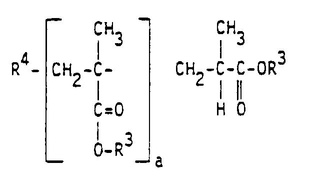 in a molar ratio of polymethacrylic esters to polysiloxanes of from 1 : 1 to 2.5 : 1 in the presence of transesterification catalysts and in the presence or absence of inert solvents at temperatures of from 70 to 150°C while distilling off the alcohol R³OH liberated.

4. Use of the block copolymers according to Claim 1 or 2 as modifiers for poly(meth)acrylates and also as additives for surface coatings dissolved in organic solvents.

## Revendications

1. Copolymères en bloc de poly(ester méthacrylique)-polysiloxane de formule générale : 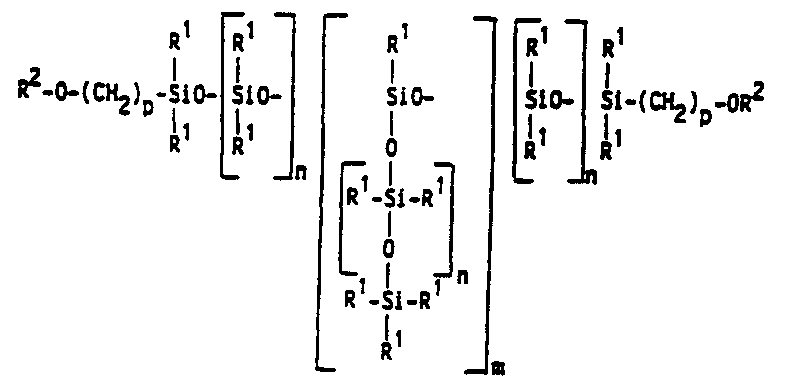 dans laquelle :
les radicaux R¹ dans la molécule sont identiques ou différents et représentent des radicaux alcoyle avec 1 à 18 atomes de carbone ou des radicaux phényle, 90% au moins des radicaux R¹ étant toutefois des radicaux méthyle;
les radicaux R² sont des radicaux hydrogène ou poly(ester méthacrylique) de formule générale : 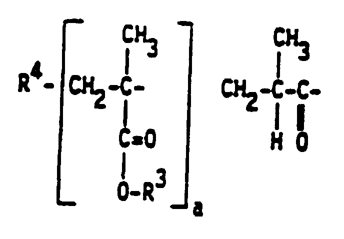
- dans laquelle :
les radicaux R³ sont identiques ou différents et représentent des radicaux alcoyle avec 1 à 8 atomes de carbone, des radicaux perfluoroalcoyle ou des radicaux alcoylamino, dont le ou les atomes d'azote peuvent être protonés ou quaternisés;
le radical R⁴ est un régulateur de chaîne connu en soi, sans atome d'hydrogène actif, et
a est un nombre qui est en moyenne ≥ 3,
avec la condition qu'au moins un radical R² a la signification du radical poly(ester méthacrylique);
n a dans chaque cas une valeur numérique de 1 à 500;
m a une valeur numérique de 0 à 10, et
p a une valeur numérique de 3 à 12.

2. Copolymère en bloc suivant la revendication 1, caractérisé en ce que les radicaux R¹ sont des radicaux méthyle et les radicaux R³ sont des radicaux alcoyle avec 1 à 4 atomes de carbone, l'indice n a une valeur numérique de 4 à 100, l'indice m a une valeur numérique de 0 et l'indice p a une valeur numérique de 3 ou 6.

3. Procédé de préparation des copolymères en bloc suivant les revendications 1 ou 2, caractérisé en ce que l'on fait réagir des polysiloxanes de formule générale : 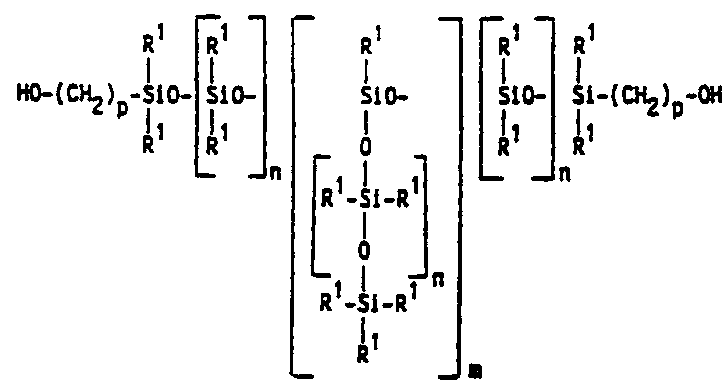 dans laquelle les radicaux R¹ et les indices n, m et p ont la signification déjà donnée, avec des poly(esters méthacryliques) de formule générale : 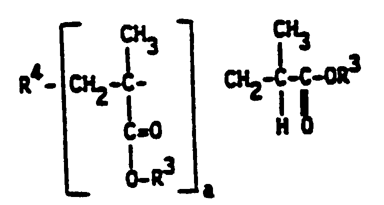 dans un rapport molaire des poly(esters méthacryliques) aux polysiloxanes de 1:1 à 2,5:1, en présence de catalyseurs de transestérification et, le cas échéant, en présence de solvants inertes, à des températures de 70 à 150°C, avec distillation des alcools R³OH qui se libèrent.

4. Utilisation des copolymères en bloc suivant la revendication 1 ou 2 comme agent modifiant pour les poly(méth)acrylates, ainsi que comme additifs pour les vernis dissous dans des solvants organiques.
